# FASCICULE DE BREVET EUROPEEN

(11) **EP 3 099 578 B1**
(45) Date de publication et mention de la délivrance du brevet: **28.02.2018**
(21) Numéro de dépôt: 14811934.0
(22) Date de dépôt: 15.12.2014
(51) Int. Cl.: B65B 3/32, A23G 9/28, B65B 39/00

(54) **DISPOSITIF ET PROCÉDÉ DE CO-DOSAGE**
VERFAHREN UND VORRICHTUNG ZUR CO-DOSIERUNG VON FLÜSSIGEN / PASTÖSEN PRODUKTEN
CO-DOSING EQUIPMENT AND PROCESS FOR LIQUID OR PASTY PRODUCTS

(30) Priorité: 27.01.2014 EP 14152622
(43) Date de publication de la demande: 07.12.2016
(73) Titulaire: Nestec S.A., 1800 Vevey (CH)
(72) Inventeur: MOREAU, Jean, F-14340 Manerbe (FR)
(74) Mandataire: Cogniat, Eric Jean Marie
(86) Numéro de dépôt international: PCT/EP2014/077785
(87) Numéro de publication internationale: WO 2015/110226

(56) Documents cités:
- EP-A1- 1 673 981
- EP-A1- 2 639 163
- EP-A2- 2 177 109

## Description

La présente invention concerne un dispositif et un procédé de dosage et de produits liquides et/ou pâteux, notamment alimentaires.

Elle porte plus particulièrement sur le domaine du dosage de plusieurs produits liquides et/ou pâteux afin de remplir un récipient de ces produits. La technique consistant à extruder plusieurs produits en même temps afin d'en remplir un récipient est appelée « co-dosage ».

Le principe général du co-dosage est d'alimenter une buse dite de co-dosage, avec plusieurs produits par l'intermédiaire de deux ou plusieurs doseurs. Un doseur comporte par exemple un système de pompe à piston. La buse sert quant à elle à expulser les doses de produit de façon organisée dans le pot.

Dans le domaine des produits alimentaires, le co-dosage de deux ou plusieurs produits dans un pot, typiquement transparent, est de plus en plus utilisé afin de donner une forme et un aspect visuel attractif et nouveau au produit. Cette technologie est par exemple fréquemment employée pour le remplissage des pots de produits laitiers. De manière générale, ce procédé est de plus en plus utilisé dans les desserts laitiers frais conditionnés en pots transparents.

Le co-dosage permet par exemple de donner au produit fini (par exemple au dessert en pot) un aspect visuel coloré et contrasté. Une différence de texture entre les produits co-dosés peut également apporter une expérience gustative nouvelle au consommateur. Une introduction successive de différents produits dans un pot permet l'obtention d'aspects visuels et de textures contrastées. Cependant, les couches de différents produits se superposent alors simplement horizontalement, ce qui n'apporte pas au produit fini un aspect visuel innovant. Cela est résolu par l'introduction simultanée de plusieurs produits lors du co-dosage.

Les principes généraux du co-dosage sont divulgués dans le document US3267971. Dans ce document, la buse mise en oeuvre présente une forme spécifique au dessin (aspect final vu de l'extérieur du pot) que l'on souhaite obtenir. Le dessin le plus simple étant une succession de bandes verticales.

D'autres dispositifs connus permettent un dessin spécifique, notamment lorsque la distribution des produits est réalisée par plusieurs canaux que comporte la buse. La buse comporte ainsi généralement des canaux débouchant en au moins autant d'orifices que de produits co-dosés (typiquement deux). Ces canaux peuvent être approvisionnés de façon continue, séquentielle ou alternative. Les documents FR2708563 et EP2177109 présentent ainsi un dispositif de co-dosage comportant une buse à canaux et orifices multiples.

Afin de donner au produit fini un aspect attractif ou original, il est connu de créer, lors du co-dosage de plusieurs produits, un mouvement relatif vertical et/ou de rotation entre la buse et le pot qui est rempli. Ainsi, la buse et/ou le pot peuvent être mis en mouvement. Cela permet l'obtention de motifs ayant une certaine originalité, tels que des zigzags ou des produits se superposant en double hélice.

Cette technique présente cependant un certain nombre de difficultés techniques. En général, le nombre de produits co-dosés est limité à deux, et en de rares exceptions trois. En effet, doser plusieurs produits dans un pot implique d'approvisionner la ligne de conditionnement avec plusieurs produits différents et requiert l'utilisation d'un système de dosage et de distribution propre à chacun de ces produits. Plus le nombre de doseurs est important, plus l'encombrement lié à leur juxtaposition est difficile à gérer industriellement, et plus les coûts globaux de conception et de réalisation de la machine sont élevés. C'est pourquoi, si certaines machines sont équipées de deux doseurs, les machines équipées de trois unités sont beaucoup plus rares. L'espace disponible dans certaines machines de conditionnement est également limité et ne permet pas la juxtaposition de plusieurs doseurs et d'outils porte buse.

L'invention développée vise à l'obtention d'un dispositif et d'un procédé de co-dosage, permettant l'obtention d'un produit fini comportant au moins trois produits d'aspects visuels ou de textures bien différenciés, sur une ligne de conditionnement comportant un nombre moindre de doseurs.

Ainsi, l'invention porte sur un dispositif de co-dosage de produits liquides et/ou pâteux, comportant :
- un premier doseur pour le dosage d'un premier produit ;
- un deuxième doseur pour le dosage d'un deuxième produit ;
- une buse comportant un premier canal alimenté par le premier doseur et débouchant au niveau d'un premier orifice, et un deuxième canal alimenté par le deuxième doseur et débouchant au niveau d'un deuxième orifice. Dans un tel dispositif conforme à l'invention, la buse comporte un troisième canal débouchant au niveau d'un troisième orifice, le dispositif étant configuré de sorte que le troisième canal est alimenté par les premier et deuxième doseurs, de sorte qu'un mélange des premier et deuxième produits est expulsé par ledit troisième orifice.

Ainsi, le mélange des premier et deuxième produits apparait comme un troisième produit, distinct des premier et deuxième produits, notamment si lesdits premier et deuxième produits présentent des couleurs, teintes et/ou textures très différentes. Le produit fini pouvant être obtenu à l'aide d'un tel dispositif semble ainsi comporter au moins trois produits d'aspects visuels ou de textures bien différenciés.

Selon un mode de réalisation, le dispositif comporte un troisième doseur, lié à un quatrième canal de la buse débouchant au niveau d'un quatrième orifice. La buse peut alors avantageusement comporter un cinquième canal lié à un cinquième orifice, le dispositif étant configuré de sorte que le cinquième canal est alimenté par le troisième doseur et le premier doseur. La buse peut en outre avantageusement comporter un sixième canal lié à un sixième orifice, le dispositif étant configuré de sorte que le sixième canal est alimenté par le troisième doseur et le deuxième doseur.

Un dispositif conforme à l'invention peut avantageusement comporter un mélangeur statique configuré de sorte à homogénéiser le mélange des produits issus de deux doseurs.

Le mélangeur statique peut être intégré dans la buse. En d'autres termes, la buse peut comporter le (ou les) mélangeur statique.

En rassemblant un maximum de fonctions dans la buse, telles que le mélange et l'homogénéisation des produits co-dosés, un dispositif très compact peut être obtenu. En outre, une ligne de production préexistante peut être facilement adaptée afin d'obtenir un dispositif conforme à un mode de réalisation de l'invention.

De préférence, le dispositif comporte des moyens d'alimentation séquentielle d'au moins un des canaux de la buse.

Les doseurs peuvent notamment comporter chacun une pompe de type à piston ou à rotor excentré.

Le dispositif peut comporter un support de pot et des moyens aptes à générer un mouvement relatif entre la buse et le support de pot. Un tel mouvement relatif, éventuellement conjugué à une alimentation séquentielle des canaux de la buse, permet la création de motifs attractifs ou originaux.

La buse peut être mobile. Le support de pot peut être mobile. La buse et le support de pot peuvent tous deux être mobiles. La notion de mobilité s'entend ici dans un repère fixe lié à un élément du dispositif fixe par rapport au sol.

L'invention porte également sur un procédé de co-dosage de produits liquides et/ou pâteux, comportant les étapes de :
- fourniture d'un premier produit et d'un deuxième produit à un dispositif de co-dosage ;
- expulsion de manière simultanée et/ou séquentielle dans un récipient, par une buse du dispositif de co-dosage comportant plusieurs orifices, du premier produit par un premier orifice de la buse, du deuxième produit par un deuxième orifice de la buse, et d'un mélange des premier et deuxième produit par un troisième orifice de la buse.

Le procédé peut en outre comporter une étape d'homogénéisation du mélange entre les premier et deuxième produits, préalablement à l'expulsion dudit mélange.

Ainsi, à l'issue du procédé de co-dosage, il est possible d'obtenir un produit fini semblant ainsi comporter au moins trois produits d'aspects visuels ou de textures bien différenciés.

Enfin, un produit susceptible d'être obtenu par la mise en oeuvre du procédé de co-dosage de produits liquides et/ou pâteux est décrit.

D'autres particularités et avantages de l'invention apparaîtront encore dans la description ci-après, présentant l'invention dans le contexte général du co-dosage.

Aux dessins annexés, donnés à titre d'exemples non limitatifs :
- la figure 1 représente schématiquement en coupe une buse à plusieurs orifices, telle que connue dans l'état de la technique ;
- la figure 2 représente schématiquement la face de la buse de la figure 1 présentant les orifices;
- la figure 3 représente schématiquement un produit fini, tel qu'il peut être obtenu à l'aide d'un dispositif de co-dosage mettant en oeuvre la buse représentée aux figures 1 et 2 ;
- la figure 4 représente schématiquement la face présentant les orifices d'une buse selon un mode de réalisation connu dans l'état de la technique ;
- la figure 5 représente schématiquement un produit fini, tel qu'il peut être obtenu à l'aide d'un dispositif de co-dosage mettant en oeuvre la buse représentée à la figure 4 ;
- la figure 6 représente schématiquement un dispositif de co-dosage conforme à un mode de réalisation de l'invention ;
- la figure 7 représente schématiquement la face présentant les orifices d'une buse conforme à un mode de réalisation de l'invention ;
- les figures 8 et 9 représentent schématiquement deux produits finis, tel qu'ils peuvent respectivement être obtenus à l'aide d'un dispositif de co-dosage mettant en oeuvre la buse représentée à la figure 7 ;
- la figure 10 représente schématiquement selon une première coupe une buse à plusieurs orifices, selon un mode de réalisation de l'invention ;
- la figure 11 représente schématiquement la face présentant les orifices de la buse présentée en figure 10, et aide à la définiton de la coupe représentée à la figure 10 ;
- la figure 12 représente schématiquement selon une seconde coupe la buse représentée aux figures 10 et 11 ;
- la figure 13 représente schématiquement la face présentant les orifices de la buse présentée en figure 10, 11 et 12, et aide à la définition de la coupe représentée à la figure 12 ;
- les figures 14 et 15 représentent schématiquement deux produits finis, tel qu'ils peuvent respectivement être obtenus à l'aide d'un dispositif de co-dosage mettant en oeuvre la buse représentée aux figures 10 à 13 ;
- la figure 16 représente schématiquement la face présentant les orifices d'une buse selon un mode de réalisation particulier de l'invention.
- les figures 17 à 26 présentent des exemples d'aspects visuels de plusieurs produits finis en pot transparent, pouvant être obtenus par co-dosage de produits contrastés.

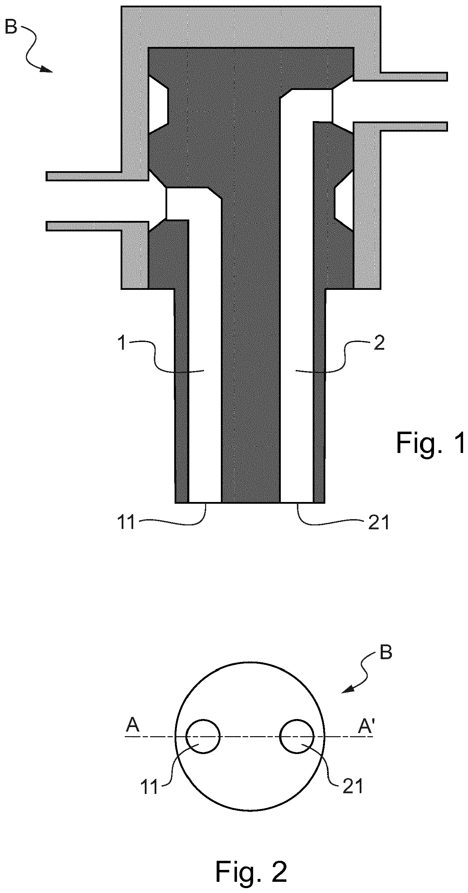

La figure 1 présente schématiquement, en coupe selon le plan AA visible à la figure 2, une buse B à plusieurs orifices 11,21, telle que connue dans l'état de la technique pour l'expulsion de deux produits liquides ou pâteux en vue de leur conditionnement dans un récipient. Le conditionnement peut être réalisé typiquement dans un pot pouvant être transparent ou translucide.

La figure 2 est une représentation schématique d'une face de la buse représentée à la figure 1, face sur laquelle débouchent plusieurs canaux formant les orifices 12, 22 de la buse.

Un premier canal 1 débouchant en un premier orifice 11 est destiné à distribuer un premier produit P1, pâteux ou liquide. Un deuxième canal 2 débouchant en un deuxième orifice 21 est destiné à distribuer un deuxième produit P2, pâteux ou liquide.

Les premier produit P1 et deuxième produit P2 peuvent être fortement contrastés l'un par rapport à l'autre. Le contraste peut résulter d'une ou plusieurs caractéristiques organoleptiques des produits P1 et P2, telles que la couleur, le goût, la texture, la viscosité, le foisonnement, par exemple. En tout état de cause, les premier produit P1 et deuxième produit P2 sont différents l'un de l'autre. De préférence, le premier produit P1 et le deuxième produit P2 sont des produits alimentaires, par exemple les préparations utilisées dans les desserts lactés.

A titre d'exemple non limitatif, le premier produit P1 et le deuxième produit P2 sont différents l'un de l'autre et sélectionnés parmi :
- les préparations constituées principalement de fruits, telles que purée, compote, coulis, ou sirop ;
- les préparations laitières, optionnellement aromatisées, telles que yaourt, fromage frais, quark, crème ;
- les préparations pâtissières, telles que crème au chocolat, à la vanille, caramel, mousse au chocolat, gelées.

Par exemple et de manière non limitative, les deux produits à doser peuvent être une crème au chocolat et une crème vanille, un coulis de fruit rouge et un fromage frais, ou encore une mousse laitière blanche et un coulis caramel.

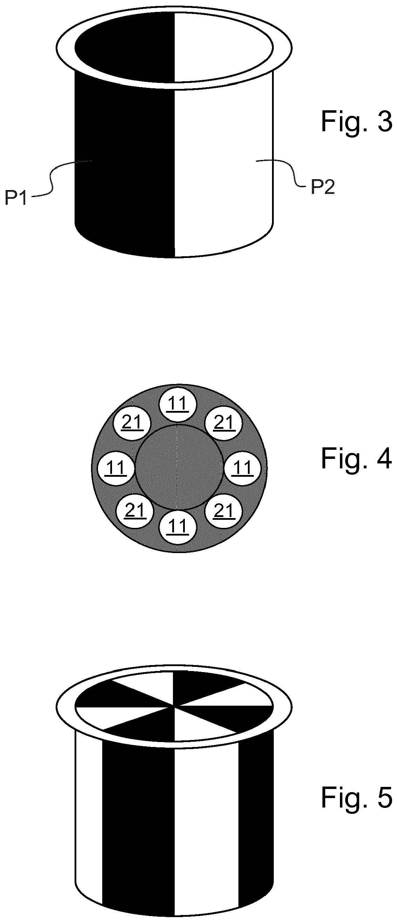

La figure 3 représente schématiquement un produit fini, c'est-à-dire le produit issu du co-dosage de plusieurs produits pâteux ou liquide dans un pot, typiquement transparent, tel qu'il peut être obtenu à l'aide d'un dispositif de co-dosage mettant en oeuvre la buse représentée aux figures 1 et 2. L'exemple présenté en figure 3 correspond à l'aspect le plus simple que peut avoir le produit fini, à savoir avec une répartition du premier produit P1 et du deuxième produit P2 côte à côte dans le pot, en quantités égales. Les premier orifice 11 et deuxième orifice 21 sont représentés ici avec une embouchure ronde. Toute forme d'embouchure est néanmoins envisageable selon l'aspect final du produit qui est souhaité.

De manière générale dans le domaine du co-dosage, pour éviter le mélange des différents produits dans le pot et pour répartir les produits co-dosés dans le pot de la manière souhaitée, un certain savoir-faire est nécessaire.

Il convient bien évidemment d'avoir une bonne maîtrise des volumes dosés et distribués des différents produits pâteux ou liquides, mais il faut aussi et surtout une bonne maîtrise des flux de ces différents produits dans les organes de dosage et lors de l'expulsion par les orifices de la buse dans le pot.

Par exemple la vitesse d'expulsion de ces produits doit être contrôlée et réduite pour éviter leur mélange.

Le temps de dosage imposé par les machines industrielles constitue également une forte contrainte. En effet, pour une meilleure productivité, l'ensemble des opérations de dosage doit être réalisé selon un cycle court, souvent inférieur à deux secondes, voire inférieur à une seconde.

La mécanisation du dosage est aussi une contrainte industrielle importante, car les dispositifs de dosage sont couramment employés sur des lignes dites multi pistes, c'est-à-dire sur lesquelles plusieurs pots sont remplis à la fois. Dans de telles lignes industrielles de dosage, ce sont généralement de dix à vingt-quatre pots, voire plus, qui sont dosés simultanément. Un dispositif de dosage doit donc être compact, afin qu'autant de dispositifs que de pots à remplir puissent être juxtaposés, au-dessus des pots, sur la ligne.

Bien évidemment, des aspects plus originaux que celui présenté à la figure 3 peuvent être obtenus, et divers moyens et procédés sont connus dans l'état de la technique pour ce faire. Par exemple, au lieu de présenter deux orifices, la buse B peut présenter un plus grand nombre d'orifices, tel que représenté à la figure 4. Dans la pratique, la buse B est configurée pour que chaque orifice expulse soit le premier produit P1, soit le deuxième produit P2. Il y a donc dans la buse un ensemble de premiers canaux 1 débouchant en un ensemble de premiers orifices 11, et un ensemble de deuxièmes canaux 2 débouchant en un ensemble de deuxièmes orifices 21.

Selon le mode de réalisation connu dans l'état de la technique et représenté à la figure 4, la buse B comporte huit orifices disposés en cercle, de sorte qu'un orifice destiné à expulser le produit P1 est entre deux orifices qui lui sont directement voisins et qui sont destinés à expulser le deuxième produit P2, et vice-versa.

L'aspect du produit fini, en pot transparent, pouvant être obtenu à l'aide de la buse représentée à la figure 4, est représenté à la figure 5. Les premier produit P1 et deuxième produit P2 sont répartis en autant de secteurs verticaux que la buse présente d'orifices. En l'occurrence, dans l'exemple ici représenté, les produits étant expulsés en quantité égale par chaque orifice, le produit fini en pot présente quatre secteurs de premier produit P1 alternant circulairement avec quatre secteurs de deuxième produit P2.

Un empilement en hélice des produits peut également être obtenu de manière connue en mettant le pot en rotation lors de son remplissage.

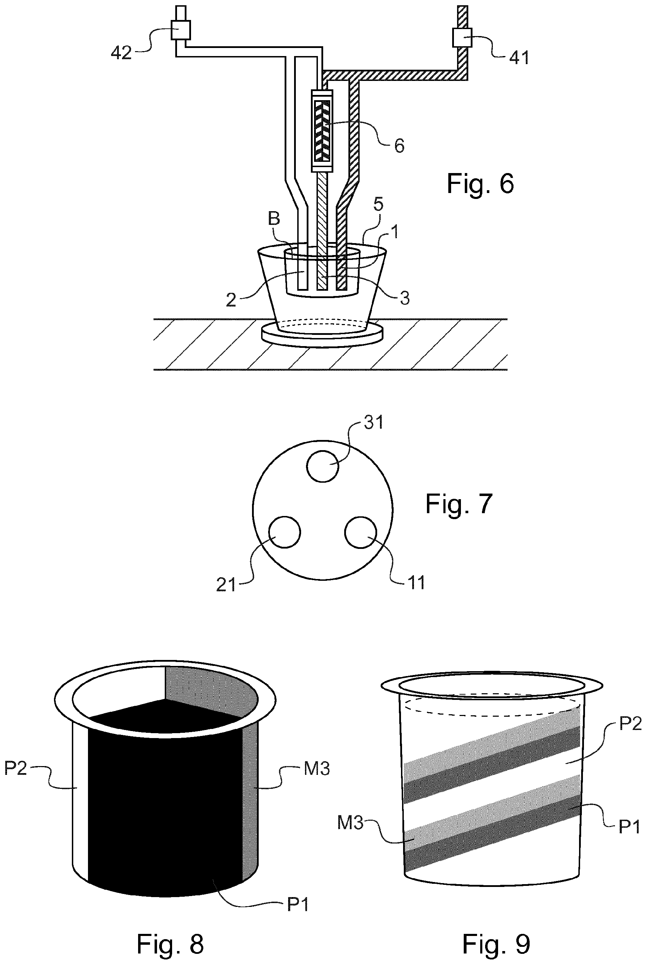

La figure 6 représente schématiquement un dispositif de co-dosage de produits liquides et/ou pâteux conforme à un mode de réalisation de l'invention.

Le dispositif comporte un premier doseur 41 et un deuxième doseur 42. Les premier et deuxième doseurs 41, 42 permettent d'introduire une quantité précise de produits dans un récipient 5 et maitriser précisément les flux de produits.

Les équipements de dosage les plus communément utilisés pour la maîtrise des flux produits sont des pompes positives. La plus adéquate est basée sur le principe du piston. La course du piston détermine le volume à doser et la vitesse dynamique de poussée d'axe détermine la dynamique d'aspiration et d'éjection. Il est en effet important de maitriser les vitesses de poussée et d'aspiration. La vitesse d'expulsion permet de gérer le flux produit en sortie, et celle d'aspiration permet le gavage correct de la chambre piston par le produit, ce qui garantit une bonne régularité des doses introduites à chaque cycle. La vitesse d'aspiration doit cependant être maîtrisée et adaptée de sorte à éviter de déstructurer le produit dosé.

D'autres types de pompes peuvent également être employés. Les pompes à pousser dites positives sont tout particulièrement adaptées. Une pompe positive fonctionne sur le principe d'une augmentation suivi d'une diminution du volume d'une chambre. Parmi les pompes positives on connaît notamment les pompes à lobes, les pompes sinusoïdales, les pompes à membrane, les pompes hélicoïdales. Typiquement, les pompes positives du type à rotor excentré peuvent être employées. On parle couramment de pompes de type Moineau. Elles sont particulièrement bien adaptées au dosage des produits chargés (comportant des particules solides) et/ou très visqueux. Parmi les pompes positives, les pompes dites à lobes ou péristaltiques peuvent également être employées avec succès pour le co-dosage.

Dans un dispositif conforme à l'invention, le premier doseur 41 est configuré pour doser un premier produit P1. Le dispositif permet donc l'alimentation en premier produit P1 du premier doseur 41. Le deuxième doseur 42 est configuré pour doser un deuxième produit P2. Le dispositif permet donc l'alimentation en deuxième produit P2 du deuxième doseur 42. Le dispositif comporte une buse B pour l'expulsion des produits. La buse comporte un premier canal 1 et un deuxième canal 2, alimentés respectivement en premier produit P1 par le premier doseur 41 et en deuxième produit P2 par le deuxième doseur 42. Dans l'invention, la buse comporte un troisième canal 3. Le premier canal 1 débouche au niveau d'un premier orifice 11 de la buse B, le deuxième canal 2 débouche au niveau d'un deuxième orifice 21 de la buse B, le troisième canal débouche au niveau d'un troisième orifice 31 de la buse.

Le troisième canal 3 est alimenté par le premier doseur 41 et par le deuxième doseur 42, de sorte que le troisième orifice expulse un mélange M3 des premier et deuxième produits P1, P2. Le mélange M3, dans la mesure ou les premier produit P1 et deuxième produit P2 sont très contrastés, de couleurs différentes, et ou de textures bien différentiées, peut présenter une teinte, une couleur, et/ou une texture très différente(s) de celles des premier produit P1 et deuxième produit P2, donnant l'impression qu'il s'agit d'un troisième produit à proprement parler.

Le mélange M3 peut être homogène ou être un mélange partiel des premier produit P1 et deuxième produit P2. La proportion des premier produit P1 et deuxième produit P2 peut être adaptée de sorte à obtenir l'aspect ou la texture souhaitée de mélange M3.

Des dispositifs peuvent être employés pour favoriser le bon mélange des premier produit P1 et deuxième produit P2. Un mélangeur statique 6 peut être employé. Il peut typiquement être implanté dans le troisième canal 3, ou en amont du troisième canal dans un conduit alimenté par les premier et deuxième doseurs 41, 42.

Le dispositif décrit en regard de la figure 6 permet l'obtention d'un produit fini ayant l'aspect schématiquement représenté à la figure 8. Les premier produit P1, deuxième produit P2, et mélange M3 sont répartis en trois secteurs verticaux.

En créant un mouvement relatif entre la buse B et le récipient 5, il est possible d'obtenir des aspects plus originaux ou attractifs. Par exemple, dans le dispositif représenté en figure 6, le pot est mis en rotation par un support rotatif lors de son remplissage par le dispositif de dosage. Cela permet l'obtention d'un produit fini ayant l'aspect schématiquement représenté à la figure 9, c'est-à-dire présentant des produits empilés en triple hélice.

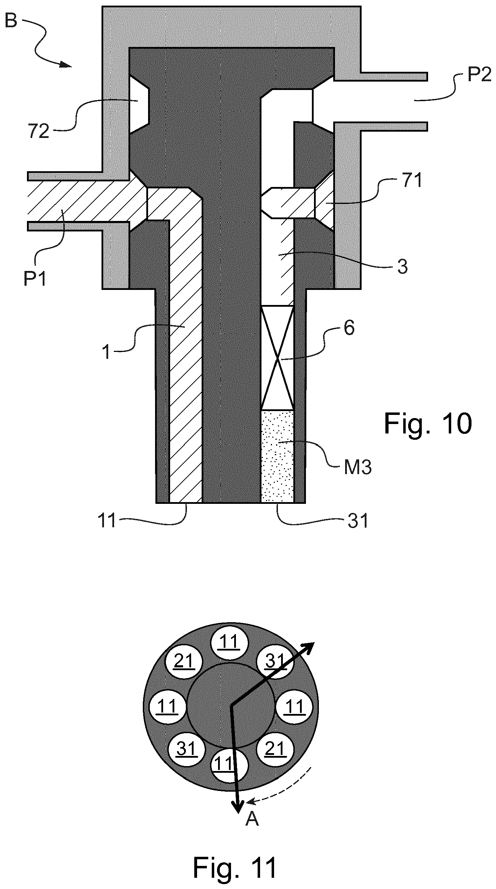

De nombreuses variantes du dispositif présenté en figure 6 peuvent être conçues sans sortir du cadre de l'invention. Typiquement, la buse B peut présenter plus de trois canaux et trois orifices. Ainsi, la buse présentée à la figure 11 présente-t-elle huit orifices, en l'occurrence deux premiers orifices 11 pour l'expulsion du premier produit P1, quatre deuxièmes orifices 21 pour l'expulsion du deuxième produit P2, et deux troisième orifices 31 pour l'expulsion du mélange M3. En outre, plusieurs variantes de l'invention sont envisageables notamment pour ce qui concerne la façon dont le troisième canal 3 est créé et alimenté en produits. Pour une meilleure compacité de l'ensemble et afin de pouvoir adapter facilement une ligne préexistante munie de deux doseurs uniquement, le mélange M3 peut être formé directement dans le troisième canal 3 de la buse B.

La figure 10 présente ainsi, selon une vue schématique en coupe, une buse à plusieurs orifices 11, 21, 31, en l'occurrence huit orifices, selon un mode de réalisation de l'invention. La figure 10 représente en fait à deux plans de coupe, selon le secteur A-A' montré à la figure 11, de sorte à présenter sur la même figure un plan de coupe passant par un premier canal 1, et un plan de coupe passant par un troisième canal 3.

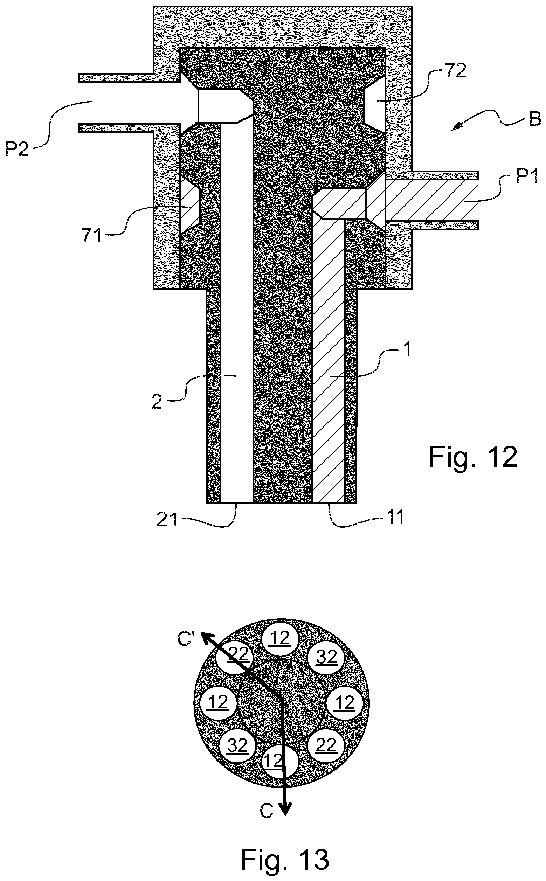

La figure 12 présente quant à elle selon une vue schématique en coupe, la même buse que celle représentée aux figures 10 et 11, selon deux plans de coupe définis par le secteur C-C' à la figure 13. Ainsi, sur la même figure sont représentés un plan de coupe passant par un premier canal 1, et un plan de coupe passant par un deuxième canal 2.

La buse représentée aux figures 10 à 13 est alimentée en premier produit P1 et en deuxième produit P2, respectivement par un premier doseur 41 et un deuxième doseur 42, en deux étages distincts de la buse. Chaque étage comporte une gorge périphérique, à savoir une première gorge périphérique 71 et une deuxième gorge périphérique 72. Chaque premier, deuxième, ou troisième canal est alimenté respectivement par un piquage dans la première gorge périphérique 71, la deuxième gorge périphérique 72, ou dans chacune des première et deuxième gorges périphériques 71, 72.

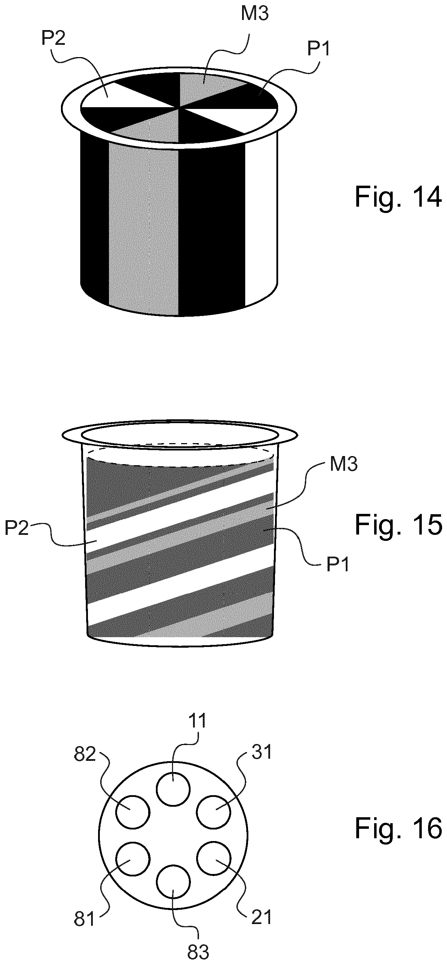

L'emploi d'une buse telle que représentée aux figures 10 à 13 permet l'obtention d'un produit fini ayant l'aspect schématiquement représenté à la figure 14. Les premier produit P1, deuxième produit P2 et mélange M3 sont répartis en autant de secteurs verticaux que la buse présente d'orifices, avec une répartition des secteurs définie par la répartition les orifices de la buse B.

Par un mouvement de rotation relatif entre la buse B et le récipient 5, il est possible d'obtenir un produit fini dont l'aspect est présenté à la figure 15. Les premier produit P1, deuxième produit P2 et mélange M3 sont empilés en hélice, selon la répartition les orifices de la buse B.

Selon un autre mode de réalisation de l'invention, le dispositif peut comporter un troisième doseur pour le dosage d'un troisième produit. Tel que représenté à la figure 16, une buse B comportant de multiples orifices présente, en plus d'un premier orifice 11 pour l'expulsion d'un premier produit P1, d'un deuxième orifice pour l'expulsion d'un deuxième produit P2, d'un troisième orifice 31 pour l'expulsion du mélange M3, un quatrième orifice 81 pour l'expulsion du troisième produit. Le troisième produit circule alors dans un quatrième canal du dispositif, débouchant au niveau du quatrième orifice 81.

Selon diverses variantes de l'invention, plusieurs combinaisons des premier, deuxième et troisième produits peuvent être réalisées pour obtenir autant de mélange à la teinte, couleur, et/ou texture propre. Jusque sept produits (ou mélanges) de teintes, couleurs, et/ou textures différentes peuvent être fournis par la buse B lorsque le dispositif de co-dosage comporte trois doseurs alimentés chacun par un produit différent : 1) un premier produit P1 ; 2) un deuxième produit P2 ; 3) un troisième produit P3 ; 4) un mélange M3 des premier produit P1 et deuxième produit P2 ; 5) un autre mélange des premier produit P1 et troisième produit P3 ; 6) un autre mélange des deuxième produit P2 et troisième produit P3 ; 7) un autre mélange des trois produits.

Dans l'exemple présenté en figure 16, six produits ou mélanges peuvent être fournis par le dispositif : en plus des orifices de buse précédemment mentionnés, la buse présente un cinquième orifice 81 et un sixième orifice 82, le dispositif étant configuré dans l'exemple ici représenté pour expulser un mélange des premier produit P1 et troisième produit P3 par le cinquième orifice 81 et un mélange des deuxième produit P2 et troisième produit P3 par un sixième orifice 82.

Dans une telle configuration de dispositif, chaque canal de la buse destiné à l'expulsion d'un mélange de plusieurs produits peut être équipé de moyens de mélange tel qu'un mélangeur statique.

Le dispositif peut en outre comporter des moyens d'alimentation séquentielle (non représentés) d'au moins un des canaux. En d'autres termes, le dispositif peut comporter des moyens d'arrêter et de reprendre, brusquement ou progressivement, l'alimentation de certains canaux et donc la fourniture des produits ou mélanges par l'un ou plusieurs quelconques des canaux alimentés via un desdits moyens d'alimentation séquentielle. Les moyens d'alimentation séquentielle peuvent par exemple comporter des moyens de pilotage des doseurs adaptés. Ils peuvent également ou alternativement comporter des vannes de distribution, par exemple des électrovannes, pour interrompre pendant le co-dosage le flux de produit (ou mélange) dans tel ou tel canal.

L'invention développée permet donc typiquement d'obtenir un produit fini semblant visuellement (ou en termes de texture) comporter trois produits, et cela sur une ligne de conditionnement prévue pour le dosage de deux produits seulement, et équipée de deux doseurs seulement.

L'invention est donc applicable à la fabrication de nombreux produits, notamment alimentaires. Par exemple avec de la crème à la vanille et de la crème au chocolat noir, on peut obtenir un produit fini semblant comporter trois produits distincts : de la crème à la vanille, de la crème au chocolat au lait, et de la crème au chocolat noir. De même, avec un fromage blanc et un coulis de fruit rouge, on peut obtenir un produit fini semblant contenir un fromage blanc, un fromage à la fraise, et étant marbré de rayures de coulis rouge. Une mousse blanche laitière et du caramel permet l'obtention d'un produit fini faisant apparaitre une juxtaposition de mousse blanche et de mousse marron caramel, le tout rayé de stries foncées de caramel.

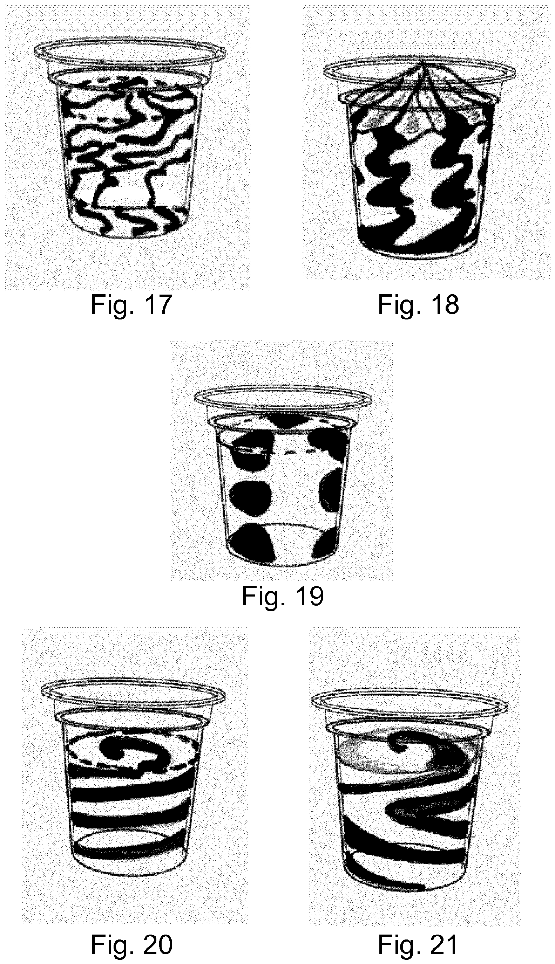

L'invention ainsi développée permet l'obtention d'une diversité d'aspect encore inconnue dans le domaine, à l'aide de dispositifs relativement simples. En combinant l'invention avec certaines méthodes ou savoir-faire du domaine du dosage ou du co-dosage des produits liquides ou pâteux, une grande variété d'aspects novateurs ou attractifs peut être obtenue. Certains paramètres dont la maîtrise est importante sont décrits ci-après, et divers aspects ou motifs d'un produit fini que la maîtrise de ces paramètres permet d'obtenir sont représentés aux figures 17 à 27.

Les paramètres portent sur la prise en compte des caractéristiques du ou des produits dosés, la conception des dispositifs de dosage, que ce soit dans leur architecture générale, dans le choix des technologies de dosage, ou dans la conception des buses, le pilotage des dispositifs, et sur le pilotage de la position relative de la buse et du récipient rempli lors du dosage.

La rhéologie des produits à doser doit être correctement prise en compte. En effet, une différence de viscosité ou de comportement rhéologique des produits à doser augmente la difficulté de co-dosage. Les paramètres rhéologiques à prendre en compte sont nombreux : les produits peuvent être visqueux ou liquides, collants ou glissants, mousseux ou non, etc. Si deux produits semi-visqueux et de même comportement rhéologiques sont relativement faciles à co-doser, la situation est plus complexe avec un produit très fluide et un produit plus visqueux, ou lorsqu'un produit très dense est dosé dans une mousse très aérée. Une différence de densité peut dans certaines situations être mise à profit pour séparer deux produits. Cela est par exemple le cas dans le dosage d'un caramel dans un lait gélifié qui se dépose rapidement au fond du pot.

Pour maitriser les vitesses de poussée et d'aspiration, de simples pistons pneumatiques ou des moteurs électriques simples ne sont pas optimaux. Une motorisation à l'aide de systèmes numériques automatisés, employant un système de servomoteurs, est préférable. Elle permet de gérer les accélérations et le temps de déplacement des éléments mobiles d'une pompe (typiquement, l'axe mobile d'un piston) pour les adapter aux caractéristiques des produits dosés pour obtenir le flux produit désiré. Une telle motorisation et sa gestion par automate permet aussi de synchroniser chacun des doseurs. Dans la poussée de deux produits de viscosités très différentes, il convient par exemple d'anticiper la poussée du plus visqueux pour obtenir une sortie simultanée des deux produits du nez de buse.

Une motorisation indépendante des pistons associés à chaque qualité de produit est avantageusement employée.

Les temps d'ouverture et de fermeture des vannes d'admission, et l'expulsion du doseur et de la buse, seront avantageusement pilotés de façon indépendante de la poussée d'un produit par chaque doseur.

Du fait de la quantité de paramètres intégrés dans l'automate, il est préférable de développer des procédures claires, typiquement pour chaque opérateur de production, et de prévoir des moyens de sauvegarde et de rappel des réglages des dispositifs de dosage. Cela permet d'obtenir le résultat de co-dosage souhaité de manière fiable et répétitive.

Néanmoins, les anciens dispositifs de co-dosage mettent souvent en oeuvre une seule motorisation pour une série de doseurs à piston, par exemple via une barre commune de pilotage. L'un des inconvénients de ces dispositifs réside dans la faible maîtrise des volumes déplacés pour les différents pistons. En effet le volume aspiré par un doseur à piston est sensible aux différences de pressions, même minimes, communément observées dans les systèmes de distribution de produits. Or, avec une seule barre de pilotage, aucun ajustement individuel sur un doseur en particulier n'est possible, sans changer le réglage des autres doseurs. Des systèmes additionnels peuvent être employés pour pallier ce problème. Par exemple, une pièce mécanique peut être ajoutée pour permettre un réglage additionnel de la course d'un piston. Selon un autre système, la perte de charge subie par le produit dosé par un doseur donné est adaptée afin de compenser l'effet des différences de pression sur le dosage.

L'un des aspects essentiels à maîtriser dans le co-dosage de produits est la vitesse d'écoulement des produits ou mélanges dosés. L'un des paramètres fondamentaux influant sur cet aspect est le choix des diamètres, formes, surfaces de section, des tuyaux et canaux employés, ainsi que de l'orifice de buse. Il s'agit alors essentiellement d'adapter la vitesse d'écoulement par le calcul de la bonne la section de passage. Cela permet d'éviter de cisailler le produit (ce qui peut entrainer sa dénaturation) par des accélérations excessives, et cela peut permettre dans certains cas de conférer au produit ou mélange dosé une énergie utile à son orientation dans le pot lors de son expulsion. Par ailleurs, pour éviter le mélange entre les différents produits co-dosés, il est souhaitable que les vitesses respectives de sortie des produits restent assez proches. Il est également important de faire en sorte que les produits restent dans un régime laminaire. Typiquement, une vitesse supérieure à 0,5 m/s provoque le plus souvent un impact en fond de pot et un mouvement des fluides qui entraine leur mélange. 0,5 à 0,25 m/s constituent généralement des vitesses d'écoulement raisonnables pour les procédés industriels de co-dosage.

La demanderesse a en outre constaté que de petites modifications dans les dynamiques (vitesses, accélérations) d'écoulement des produits conduisent à une variété d'aspects visuels de produits finis.

Par ailleurs, la maîtrise des flux de produits est couramment perturbée par des pertes de charges excessives. Ces pertes de charges dépendent souvent d'une bonne maîtrise en termes de conception technique du dispositif, très en amont de la buse de dosage. Le choix des diamètres des tuyaux et flexibles est important, et dépend de la viscosité des différents produits. Il convient également de réduire les coudes, vannes, et autres dispositifs ou configurations qui sont sources de pertes de charges.

Une perte de charge différente subie par chacun des produits co-dosés peut avoir comme conséquence une arrivée non simultanée des produits en sortie de buse. Il est alors difficile de maîtriser correctement les flux sortants de produits.

Chaque doseur d'un dispositif de dosage ou co-dosage est généralement alimenté en produit à doser par une trémie. La variation du niveau de produit dans la trémie qui alimente les divers équipements de dosage peut avoir une influence négative sur la régularité de l'écoulement. Une alimentation régulée du produit pour maintenir un niveau constant dans les trémies est un facteur positif pour l'obtention d'une bonne régularité de l'écoulement.

En outre, une bonne maîtrise de la pression dans ces mêmes trémies apporte une plus grande constance dans tout le reste du procédé de dosage ou co-dosage. Des équipements de mise en pression, et de maintien d'une pression constante, typiquement par établissement d'une surpression d'air dans la trémie peuvent être utilisés pour correctement maîtriser la pression dans la trémie. Cela est particulièrement utile et pertinent lorsque le dosage ou co-dosage met en oeuvre des produits compressibles, comme par exemple les produits aérés, des mousses.

Les pertes de charge en amont du doseur constituent un aspect important. En effet, une perte de charge excessive du fait d'une conception inadéquate d'une canalisation (diamètres inadéquat, présence de nombreux coudes) entre la trémie et le ou les organes de dosage (pompe à piston par exemple) peut influer négativement sur le résultat obtenu en aval, donc sur la qualité du dosage. Dans un système comportant plusieurs doseurs qui alimentent chacun une buse, une disparité dans les pertes de charge en amont des doseurs occasionne une disparité des volumes dosés par chacun des doseurs. Certains dispositifs permettent de réduire les disparités ou d'équilibrer les pertes de charge. Il est également possible de configurer le dispositif de sorte que le doseur, typiquement à piston, vienne puiser directement le produit dosé dans la trémie.

Les pertes de charge en aval du doseur constituent un autre aspect important. En effet, les pertes de charge peuvent perturber le bon écoulement des produits. La distribution entre organe de dosage et la buse de dosage doit tendre à générer le moins possible de pertes de charge. Les pertes de charge sont notamment liées à la distance entre le doseur et la buse d'expulsion, ce qui est déterminé par l'architecture générale du dispositif de dosage. Une solution simple consiste pour limiter les pertes de charge entre les doseurs et la buse consiste à positionner les doseurs au-dessus, droits, et au plus près de la buse et des pots. La compacité générale du dispositif est donc importante.

Cependant, une telle solution est difficilement compatible d'une buse mobile. En outre, cette configuration avec des doseurs situés au-dessus des pots complique également la conception des machines dites « hygiéniques ».

En effet dans ces machines de conditionnement Ultra-propres, ou un flux laminaire est utilisé pour des raisons hygiéniques, il est préférable de déporter les organes de dosage avec leurs pièces mobiles en dehors de l'enceinte de conditionnement (comportant la ligne de remplissage des pots). Les pistons doseurs ainsi sont souvent placés en dehors de l'enceinte de conditionnement pour libérer l'espace situé au droit des récipients à conditionner. Seules les buses demeurent dans l'enceinte de conditionnement, et sont reliées au doseur par une tuyauterie flexible et /ou rigide. Cela génère une perte de charge importante entre le doseur et la buse.

La pression résiduelle en amont et en aval du doseur sont également des paramètres influents dont la maitrise est importante. Si la pression en aval du doseur est forte, le produit reflue dans la chambre de dosage au moment de son chargement (remplissage en produit à doser). Cela fausse la bonne connaissance le volume effectivement aspiré qui, typiquement, ne correspond pas à la cylindrée de la pompe. Pour minimiser ce phénomène, le dispositif peut être équipé d'un système de vannes séparatives qui isole la chambre de dosage des zones immédiatement en amont ou en aval, lors des phases de dosage (aspiration ou refoulement). Des vannes de type à boisseau rotatif peuvent être employées pour cela.

De manière générale, les dispositifs de dosage qui n'utilisent pas de vanne de dosage immédiatement en aval du doseur et qui ont une buse déportée sont peu réguliers et peu précis. Dans cette configuration, le volume mort de produit en fin de dose, c'est-à-dire le volume résiduel situé entre le doseur et la vanne de fermeture de buse, est souvent très supérieur à la dose de produit déplacée et dosée.

La pression résiduelle en aval du doseur est d'autant plus importante que le dosage est effectué a cadence rapide, que le produit est visqueux et collant, que le produit est compressible et que la longueur aval de tuyauterie est grande. Lorsque l'un (ou une combinaison) de ces paramètres engendre une forte pression résiduelle, il existe un temps minimum nécessaire entre la fin de poussée doseur et le retour à l'équilibre des pressions. Ce phénomène n'est pas favorable à une coupe nette du produit en sortie des orifices de la buse, et des goutes et coulures peuvent être produites. Dans le cas du dosage d'une mousse par exemple, la mousse dynamiquement comprimée lors de l'opération d'expulsion tend à s'expanser entre deux cycles de dosage dans le tuyau qui relie le doseur à la buse d'expulsion.

Par ailleurs, le flux des produits visqueux, collants ou dont le volume augmente par foisonnement (dits produits foisonnés, tels que la crème chantilly) sont difficiles à interrompre de façon nette, notamment au niveau des orifices de sortie des buses. Il peut par exemple se produire une expansion du produit après le dosage, des coulures par gravité.

Pour éviter les coulures, et rapidement annuler toute pression dans les orifices de buse, plusieurs techniques existent.

L'une de ces techniques consiste à effectuer une coupure de l'expulsion du produit en positionnant une vanne de fermeture au ras des orifices d'expulsion. Ainsi, il n'y a pas ou quasiment pas de volume mort, c'est-à-dire de volume résiduel dans le circuit entre la vanne de fermeture et l'orifice d'expulsion.

Cette solution simple sur un dispositif adapté à l'injection d'un seul produit avec une buse à un seul orifice est difficile à mettre en oeuvre lorsque la buse est pourvue de multiples orifices d'expulsion.

Certains systèmes de vannes sont configurés pour permettre la fermeture simultanée de plusieurs orifices d'expulsion. C'est typiquement le cas des membranes plates, membranes sphériques, clapets complexes usinés, plaques rotatives et systèmes dits « à tiroir ».

La facilité de nettoyage de ces pièces mobiles, leur usure, les problèmes d'étanchéité, et l'encombrement occasionné par l'ajout de ces vannes au droit des récipients à remplir peuvent être les éléments rendant l'application d'un tel système particulièrement complexe.

Une technique pour éviter les coulures consiste à ré-aspirer le produit en fin de dose. Cela est fait en créant une pression légèrement négative dans l'orifice d'expulsion en fin de cycle de dosage. Cette légère dépression peut être créée par exemple en dotant le circuit de deux vannes à membrane (par exemple du type à membrane dites « manchon »), situées en amont de la buse. Pour créer la dépression, les deux vannes sont fermées simultanément, puis la vanne la plus en aval (la plus proche de l'orifice d'expulsion) est rouverte. Cette dépression peut alternativement être créée par une sortie produit spécifique qui en s'ouvrant permet de rééquilibrer la pression dans le circuit, entrainant une chute de la pression en amont de l'orifice d'expulsion de la buse.

Une fermeture par obturateur assistée par un double système pneumatique peut également réaliser cette dépression, l'un des deux organes pneumatiques provoquant un léger retour arrière de l'obturateur après la fermeture complète. Il est également possible d'obtenir l'effet de ré-aspiration du produit juste après le dosage à l'aide d'un clapet de fermeture rotatif ayant un dessin adapté. Dans les systèmes de dosage utilisant des pompes rotatives positives, un bref retour en arrière de la pompe peut également permettre cette ré-aspiration. Enfin, dans des systèmes mettant en oeuvre une motorisation des pistons par servo-moteurs cette « respiration » peut être effectuée par simple programmation adéquate du mouvement de l'axe de piston.

Lors du co-dosage de plusieurs produits, en plus de la vitesse d'expulsion des produits en sortie des orifices de la buse, la hauteur de chute dans le récipient est un paramètre important à prendre en compte pour éviter le mélange des produits et obtenir un aspect régulier dans le pot.

Un maintien constant de la position (hauteur) de la buse vis-à-vis de la surface des produits pendant leur co-dosage permet la formation de lignes régulières. Cela peut être obtenu à l'aide de systèmes d'élévation du pot sur une ligne de conditionnement employant des pots préformés, ou à l'aide de système de déplacement vertical des buses sur des machines. En d'autres termes soit le récipient est déplacé vis-à-vis de la buse, soit la buse est déplacée vis-à-vis du récipient de sorte à maintenir une hauteur de chute des produits sensiblement constante. Les systèmes de déplacement de la buse sont particulièrement adaptés lorsque la machine de conditionnement employée est du type généralement désigné par l'expression anglophone « Form Fill seal », c'est-à-dire une machine qui met en forme le pot qui est rempli, et le scelle, et notamment une machine dite « horizontal Form Fill seal ». La hauteur de chute est donc un paramètre important pour l'obtention d'un produit fini dit à dosage vertical, ou en quartier, tel que représenté aux figures 3, 5, 8 et 14.

A l'inverse, il est possible de mettre à profit une variation de la hauteur de chute des produits pour obtenir certains aspects. Typiquement, en éloignant et en rapprochant la buse et le récipient l'un de l'autre plusieurs fois pendant le remplissage, une chute plus ou moins aléatoire des produits est créée. Les produits s'organisent alors en couches inclinées ou horizontales, et l'on peut par exemple obtenir l'un des aspects présentés aux figures 17 et 18.

Un ralentissement ou une interruption du mouvement de levée ou d'abaissement de la buse et/ou du récipient pendant le dosage, associé à un flux discontinu des produits, permet l'obtention d'un aspect tel que représenté à la figure 19, c'est-à-dire l'aspect d'un produit fini comportant un produit dans lequel est inclus des bulles d'un autre produit. Une motorisation du type désigné par l'expression anglophone « brushless-servo » (littéralement « servomoteur sans balais ») apporte une grande facilité de pilotage du mouvement relatif de la buse et du pot.

En outre, un arrêt de la buse dans une position intermédiaire dans le pot permet de finaliser la surface d'un produit co-dosé en lui donnant un aspect homogène. Un léger contact entre les orifices de sortie et le produit en fin de dose, suivi d'un mouvement rapide de remontée vers la position haute permet d'éviter coulures et écoulements pour les produits filants, visqueux et collants (tels que les caramels au lait, les mousses, etc...).

Pour des produits foisonnés, comme la crème chantilly par exemple, un pilotage adéquat du mouvement de la buse par rapport au récipient (ou plus exactement par rapport au niveau de produit dans le récipient) à la fin du dosage permet l'obtention d'une forme de dôme en surface du produit fini.

Pour les produits liquides le pilotage de la hauteur de chute permet aussi, en exerçant un mouvement inverse à celui de chute du produit et en réduisant autant que possible la hauteur de chute, de limiter tout effet d'éclaboussement lors de la chute du produit, ou tout risque de mélange. Cela est notamment important pour obtenir une dépose douce d'un liquide sur un produit peu visqueux en minimisant le risque de mélange entre les produits.

En outre, le pilotage de la hauteur de chute du produit, associé à un pilotage adapté de la dynamique d'expulsion du produit lors de son dosage, peut aussi permettre par exemple de positionner un deuxième produit dans un premier produit, à la profondeur désirée dans ledit premier produit.

Par ailleurs, en plus d'imposer un mouvement vertical à la buse et/ou au récipient, il est possible d'imprimer à la buse et/ou au récipient un mouvement de rotation pour donner au produit fini un aspect en spirale ou en hélice, tel que représenté aux figures 9 et 15.

Sur des machines de grande capacité sur lesquelles plusieurs pots sont dosés et remplis à la fois, plusieurs systèmes sont envisageables pour remplir cette fonction, par exemple des systèmes mécaniques par engrenage ou par courroie crantée pour l'entrainement commun en rotation de plusieurs récipients. Les systèmes employés peuvent notamment être analogues aux systèmes connus dans le domaine de la décoration des pâtisseries produites industriellement.

La vitesse de rotation, qui conditionne le nombre de tours réalisés par le récipient ou la buse lors d'un cycle de dosage permet d'obtenir une grande variété de spires. Un nombre important de tour, bien que difficile à obtenir dans la durée d'un cycle de dosage, permet d'arranger les couches de produits co-dosés de façon presque horizontale. Le produit fini peut alors typiquement avoir l'aspect représenté à la figure 20.

Une alternance dans le sens de rotation lors du dosage donne au produit un aspect spiralant en zigzag, tel que représenté à la figure 21.

L'utilisation de servomoteurs pour commander la rotation ou l'élévation de la buse par rapport au récipient permet de faire varier finement les accélérations, ce qui augmente encore la variété des aspects pouvant être obtenus. Il est ainsi par exemple possible d'étirer une spire en hauteur appliquant une vitesse variable lors de l'élévation, ou bien à l'inverse de créer des zones contrastées plus larges en ralentissant par intermittence la vitesse de remontée de la buse.

La forme, la section, le nombre et la position des orifices d'expulsion de la buse constituent autant de paramètres qui sont influents sur la façon dont vont s'organiser les produits dans le récipient.

Une répartition en cercle des orifices (à distance égale du centre de la buse, considérant une buse ayant sensiblement une forme de révolution) va en général entraîner lors d'un simple dosage vertical une forme géométrique en secteurs, avec une séparation droite des produits et s'étalant du centre vers la périphérie du pot. Une telle répartition est présentée aux figures 3, 5 et 8.

Si les produits co-dosés ont des viscosités très différentes, il convient pour obtenir une telle régularité dans la répartition des produits, de positionner les orifices respectivement destinés à l'expulsion de chaque produit à des distances différentes du centre de la buse.

Si l'un des produits co-dosé est expulsé par un orifice situé au centre de la buse, ce produit a tendance lors de son expansion dans le pot à repousser le ou les autres produits vers les bords du pot occasionnant une distribution zébrée avec dessin latéral. La position exacte des orifices afin d'obtenir le résultat souhaité, qui dépend de la viscosité dynamique des produits, est généralement obtenue et peaufinée par essais successifs.

Par ailleurs, si la section des orifices d'expulsion de l'un des produits est réduite pour imprimer a ce produit une vitesse d'expulsion supérieure aux autres produits, alors ce produit aura tendance à s'organiser en zigzag ou de manière zébrée dans le pot.

Les orifices d'expulsion des différents produits peuvent ne pas être positionnés dans un même plan. Cela permet, le cas échéant, d'éviter le contact entre les différents produits pendant et en fin de dosage. Un tel contact serait contraire à l'obtention d'un contraste marqué entre les différents produits, du fait d'un mélange local.

A contrario, il peut être intéressant de faire déboucher les orifices de sortie de l'un des produits dans l'orifice d'expulsion d'un deuxième produit, ou un peu en amont de cet orifice d'expulsion de l'autre produit.

Cela provoque un mélange « doux » ou incomplet des deux produits donnant un effet visuel particulier, par exemple marbré. L'homogénéité du mélange peut être ajustée en utilisant des chicanes placées à l'intérieur des canaux de sortie dudit deuxième produit. L'homogénéité du mélange peut être augmentée par l'emploi d'un mélangeur statique.

Le matériau choisi pour constituer la buse a aussi son importance. Les buses sont couramment en acier inoxydable (inox). Certains plastiques au comportement plus hydrophobe que l'inox envers le produit peuvent également être employés. Le mélange de différents matériaux est aussi possible. La céramique peut également être employée.

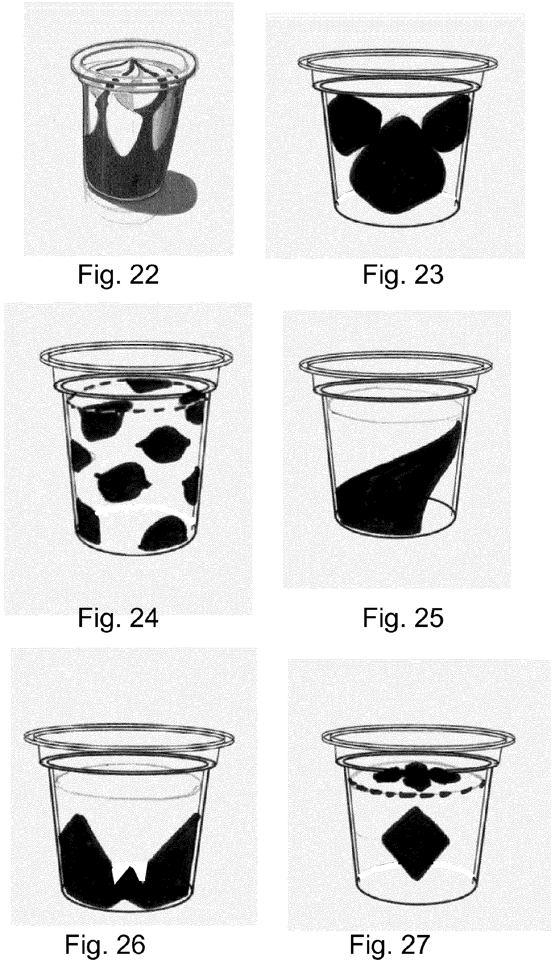

Afin d'obtenir encore d'autres aspects de produits finis, il est possible de décaler dans le temps les phases d'expulsion des doses des différents produits, qui ne sont donc pas expulsés intégralement simultanément. Il est ainsi possible de débuter l'expulsion d'un premier produit, suivi de celle d'un deuxième. Le premier produit couvre le fond du pot alors que l'expulsion du deuxième produit débute. Un exemple d'aspect d'un produit fini obtenu ainsi est représenté à la figure 22. Le même principe est bien évidemment applicable au co-dosage de plus de deux produits.

Il est même possible, dans l'hypothèse où l'expulsion du premier produit est arrêtée au moment où celle du deuxième produit débute d'organiser les produits en couches superposées.

Si l'un des produits est dosé de façon alternée alors qu'un autre est dosé de façon continue, un aspect présentant des formes de taches peut être obtenu. La forme des taches est également influencée par le mouvement vertical relatif entre la buse et le récipient. En outre, le deuxième produit peut également être distribué en alternance dans divers canaux dont la répartition permet l'obtention de taches non superposées, tel que représenté aux figures 23 et 24.

Par ailleurs, en diminuant progressivement le flux d'un produit expulsé tandis qu'augmente le flux d'un deuxième produit, la répartition des produits dans le récipient peut faire apparaître une forme pyramidale, telle que représentée à la figure 25, ou pyramidale double, triple, etc. telle que représentée à la figure 26.

La combinaison des techniques précédemment exposées permet l'obtention de produits finis d'aspect complexe, présentant des figures géométriques attrayantes, tel que le produit fini représenté à la figure 27.

Il est également possible d'employer une buse ou un doseur thermostaté. En effet, certains produits doivent être dosés à une température supérieure à leur point de solidification. C'est notamment le cas du chocolat ou de certains gels. Les doseurs et/ou buses sont alors avantageusement régulés en température pour éviter tout colmatage par du produit solidifié ou épaissi. Cela est notamment important lors des arrêts de la ligne de conditionnement.

Par ailleurs, pour maintenir le produit à une température sensiblement homogène ou pour éviter une séparation de phase, il est possible de mettre le produit en recirculation continue, ce qui évite sa stagnation. Dans ce cas, une partie seulement du produit qui circule est dosée alors qu'une autre partie, généralement très majoritaire, est retournée vers la trémie.

Tel qu'il découle de la description qui précède, une bonne maîtrise du co-dosage nécessite la configuration et le contrôle précis de nombreux paramètres qui interagissent entre eux, de sorte que l'obtention d'un réglage complet aboutissant au résultat souhaité peut se révéler complexe.

Ce sont typiquement plus de vingt paramètres différents qu'il convient de régler et/ou de piloter pour maîtriser l'expulsion des produits co-dosés, adapter dynamiquement la hauteur de chute des produits, et adapter le cas échéant les mouvements de rotation. Il est donc préférable que l'ensemble des équipements de dosage mettent en jeu une automation performante et un système de lecture clair des divers paramètres, notamment à destination d'un opérateur de production.

Un ensemble de paramètres permettant l'obtention d'un résultat souhaité peut être sauvegardé. Un tel ensemble constitue une recette. La recette peut notamment être sauvegardée sur des moyens de stockage numériques. Une recette peut être appelée par un dispositif de commande électronique d'un dispositif de dosage ou de co-dosage. Sur la base d'une telle recette une variation d'un ou de quelques paramètres pertinent permet d'obtenir toute une palette d'aspects visuels attractifs.

## Revendications

1. Dispositif de co-dosage de produits liquides et/ou pâteux, comportant :
- un premier doseur (41) pour le dosage d'un premier produit (P1) ;
- un deuxième doseur (42) pour le dosage d'un deuxième produit (P2);
- une buse (B) comportant un premier canal (1) alimenté par le premier doseur (41) et débouchant au niveau d'un premier orifice (11), un deuxième canal (2) alimenté par le deuxième doseur (42) et débouchant au niveau d'un deuxième orifice (21 et un troisième canal (3) débouchant au niveau d'un troisième orifice (31), **caractérisé en ce que** le dispositif est configuré de sorte que le troisième canal (3) est alimenté par les premier et deuxième doseur (41,42), de sorte qu'un mélange (M3) des premier et deuxième produits (P1,P2) est expulsé par ledit troisième orifice (31).

2. Dispositif selon la revendication 1, comportant un troisième doseur, lié à un quatrième canal de la buse débouchant au niveau d'un quatrième orifice (81).

3. Dispositif selon la revendication 2, dans lequel la buse (B) comporte un cinquième canal lié à un cinquième orifice (82), le dispositif étant configuré de sorte que le cinquième canal est alimenté par le troisième doseur et le premier doseur.

4. Dispositif selon la revendication 3, dans lequel la buse (B) comporte un sixième canal lié à un sixième orifice (83), le dispositif étant configuré de sorte que le sixième canal est alimenté par le troisième doseur et le deuxième doseur.

5. Dispositif selon l'une quelconque des revendications précédentes, comportant au moins un mélangeur statique (6) configuré de sorte à homogénéiser le mélange des produits issus de deux doseurs.

6. Dispositif selon l'une quelconque des revendications précédentes, comportant des moyens d'alimentation séquentielle d'au moins un des canaux de la buse.

7. Dispositif selon l'une quelconque des revendications précédentes, comportant un support de pot et des moyens aptes à générer un mouvement relatif entre la buse (B) et le support de pot.

8. Dispositif selon la revendication 7, dans lequel la buse (B) est mobile.

9. Dispositif selon la revendication 7 ou la revendication 8, dans lequel le support de pot est mobile.

10. Procédé de co-dosage de produits liquides et/ou pâteux, comportant les étapes de :
- fourniture d'un premier produit (P1) et d'un deuxième produit (P2) à un dispositif de co-dosage ;
- expulsion de manière simultanée et/ou séquentielle dans un récipient, par une buse (B) du dispositif de co-dosage comportant plusieurs orifices, du premier produit par un premier orifice (11) de la buse (B), du deuxième produit par un deuxième orifice (21) de la buse (B), et d'un mélange (M3) des premier et deuxième produit par un troisième orifice (31) de la buse (B).

11. Procédé selon la revendication 10, comportant en outre une étape d'homogénéisation du mélange (M3) entre les premier et deuxième produits (P1,P2), préalablement à l'expulsion dudit mélange (M3).

12. Procédé selon la revendication 10 ou la revendication 11, dans lequel le premier produit (P1) et le deuxième produit (P2) sont des produits alimentaires.

13. Procédé selon l'une quelconque des revendications 10 à 12, dans lequel le premier produit P1 et le deuxième produit P2 sont différents l'un de l'autre et sélectionnés parmi :
- les préparations constituées principalement de fruits, telles que purée, compote, coulis, ou sirop;
- les préparations laitières, optionnellement aromatisées, telles que lait fermenté, fromage frais, quark, crème;
- les préparations pâtissières, telles que crème au chocolat, à la vanille; sirop au caramel, au chocolat; mousse au chocolat ; gelée.

## Patentansprüche

1. Vorrichtung zur Codosierung von flüssigen und/oder pastösen Produkten, Folgendes umfassend:
- eine erste Dosierhilfe (41) zur Dosierung eines ersten Produkts (P1);
- eine zweite Dosierhilfe (42) zur Dosierung eines zweiten Produkts (P2);
- eine Düse (B), umfassend einen von der ersten Dosierhilfe (41) gespeisten und in eine erste Öffnung (11) einmündenden ersten Kanal (1), einen von der zweiten Dosierhilfe (42) gespeisten und in eine zweite Öffnung (21) einmündenden zweiten Kanal (2) und einen in eine dritte Öffnung (31) einmündenden Kanal (3), **dadurch gekennzeichnet dass** die Vorrichtung so konfiguriert ist, dass der dritte Kanal (3) von der ersten und zweiten Dosierhilfe (41, 42) so gespeist wird, dass eine Mischung (M3) des ersten und des zweiten Produkts (P1, P2) aus der dritten Öffnung (31) ausgestoßen wird.

2. Vorrichtung nach Anspruch 1, umfassend eine dritte Dosierhilfe, die mit einem vierten Kanal der Düse verbunden ist, die in eine vierte Öffnung (81) einmündet.

3. Vorrichtung nach Anspruch 2, wobei die Düse (B) einen fünften Kanal umfasst, der mit einer fünften Öffnung (82) verbunden ist, wobei die Vorrichtung so konfiguriert ist, dass der fünfte Kanal von der dritten Dosierhilfe und der ersten Dosierhilfe gespeist wird.

4. Vorrichtung nach Anspruch 3, wobei die Düse (B) einen sechsten Kanal umfasst, der mit einer sechsten Öffnung (83) verbunden ist, wobei die Vorrichtung so konfiguriert ist, dass der sechste Kanal von der dritten Dosierhilfe und der zweiten Dosierhilfe gespeist wird.

5. Vorrichtung nach einem der vorstehenden Ansprüche, umfassend mindestens einen statischen Mischer (6), der zur Homogenisierung der Mischung der aus den zwei Dosierhilfen ausgegebenen Produkten konfiguriert ist.

6. Vorrichtung nach einem der vorstehenden Ansprüche, umfassend sequenzielle Einspeisemittel aus mindestens einem der Kanäle der Düse.

7. Vorrichtung nach einem der vorstehenden Ansprüche, umfassend einen Becherträger und Mittel, die dazu ausgelegt sind, eine relative Bewegung zwischen der Düse (B) und dem Becherträger zu erzeugen.

8. Vorrichtung nach Anspruch 7, wobei die Düse (B) beweglich ist.

9. Vorrichtung nach Anspruch 7 oder Anspruch 8, wobei der Becherträger beweglich ist.

10. Verfahren zur Codosierung von flüssigen und/oder pastösen Produkten, umfassend die folgenden Schritte:
- Zuführung eines ersten Produkts (P1) und eines zweiten Produkts (P2) zu einer Vorrichtung zur Codosierung;
- gleichzeitiges und/oder sequenzielles Ausstoßen, in ein Gefäß durch eine Düse (B) der Vorrichtung zur Codosierung, die mehrere Öffnungen umfasst, des ersten Produkts durch eine erste Öffnung (11) der Düse (B), des zweiten Produkts durch eine zweite Öffnung (21) der Düse (B), und einer Mischung (M3) des ersten und zweiten Produkts durch eine dritte Öffnung (31) der Düse (B).

11. Verfahren nach Anspruch 10, ferner umfassend einen Homogenisierungsschritt der Mischung (M3) zwischen dem ersten und zweiten Produkt (P1, P2) vor dem Ausstoßen der Mischung (M3).

12. Verfahren nach Anspruch 10 oder Anspruch 11, wobei das erste Produkt (P1) und das zweite Produkt (P2) Lebensmittelprodukte sind.

13. Verfahren nach einem der Ansprüche 10 bis 12, wobei das erste Produkt P1 und das zweite Produkt P2 voneinander verschieden sind und ausgewählt sind aus:
- Zubereitungen bestehend hauptsächlich aus Früchten, wie Püree, Kompott, Fond oder Sirup;
- Milchprodukten, wahlweise aromatisiert, wie fermentierte Milch, Frischkäse, Quark, Sahne;
- Dessertzubereitungen, wie Schokoladencreme, Vanillecreme, Karamellsirup, Schokoladensirup; Mousse au Chocolat; Gelee.

## Claims

1. A device for co-metering liquid and/or pasty products, including:
- a first metering unit (41) for metering a first product (P1);
- a second metering unit (42) for metering a second product (P2);
- a nozzle (B) including a first duct (1) supplied by the first metering means (41) and opening out into a first orifice (11), a second duct (2) supplied by the second metering means (42) and opening out into a second orifice (21), and a third duct (3) opening out into a third orifice (31), **characterized in that** the device is configured such that the third duct (3) is supplied by the first and second metering means (41, 42), such that a mixture (M3) of the first and second products (P1, P2) is discharged by said third orifice (31).

2. The device according to claim 1, comprising a third metering unit, connected to a fourth duct of the nozzle opening out into a fourth orifice (81).

3. The device according to claim 2, wherein the nozzle (B) comprises a fifth duct connected to a fifth orifice (82), the device being configured such that the fifth duct is supplied by the third metering unit and the first metering unit.

4. The device according to claim 3, wherein the nozzle (B) comprises a sixth duct connected to a sixth orifice (83), the device being configured such that the sixth duct is supplied by the third metering unit and the second metering unit.

5. The device according to any one of the preceding claims, comprising at least a static mixer (6) configured so as to homogenize the mixture of the products coming from the two metering units.

6. The device according to any one of the preceding claims, comprising means for sequentially supplying at least one of the ducts of the nozzle.

7. The device according to any one of the preceding claims, comprising a container holder and means suitable for generating a relative movement between the nozzle (B) and the container holder.

8. The device according to claim 7, wherein the nozzle (B) is movable.

9. The device according to claim 7 or claim 8, wherein the container holder is movable.

10. A method for co-metering liquid and/or pasty products, including the following steps:
- providing a first product (P1) and a second product (P2) to a co-metering device;
- simultaneously and/or sequentially discharging, into a container, via a nozzle (B) of the co-metering device including several orifices, of the first product through a first orifice (11) of the nozzle (B), of the second product through a second orifice (21) of the nozzle (B), and a mixture (M3) of the first and second products through a third orifice (31) of the nozzle (B).

11. The method according to claim 10, further including a step for homogenization of the mixture (M3) of the first and second products (P1, P2), prior to the discharge of said mixture (M3).

12. The method according to claim 10 or claim 11, wherein the first product (P1) and the second product (P2) are food products.

13. The method according to any one of claims 10 to 12, wherein the first product P1 and the second product P2 are different from one another and selected from among:
- primarily fruit-based preparations, such as puree, compote, coulis, or syrup;
- dairy preparations, optionally flavored, such as fermented milk, fresh cheese, quark, cream;
- pastry preparations, such as chocolate pudding, vanilla pudding; caramel, chocolate syrup; chocolate mousse; jelly.
